# EUROPEAN PATENT SPECIFICATION

(11) **EP 1 040 498 B1**
(45) Date of publication and mention of the grant of the patent: **03.04.2002**
(21) Application number: 98962138.8
(22) Date of filing: 17.12.1998
(51) Int. Cl.: H01H 35/14, G01P 15/135

(54) **SCHOCK SENSOR**
STOSSMESSAUFNEHMER
DETECTEUR DE CHOCS

(30) Priority: 17.12.1997 BE 9701035
(43) Date of publication of application: 04.10.2000
(73) Proprietor: Bollen, Romain, 3500 Hasselt (BE)
(72) Inventor: Bollen, Romain, 3500 Hasselt (BE)
(74) Representative: Luys, Marie-José A.H.
(86) International application number: BE9800202
(87) International publication number: WO9931695

(56) References cited:
- EP-A- 0 683 500
- DE-A- 19 513 277
- DE-U- 1 987 786
- FR-A- 1 585 519
- US-A- 2 236 872

## Description

This invention relates to a switch system comprising a housing and a sensor mass mounted into the housing, and means for making or breaking an electrical contact.

This switch system is suitable for use as a sensor, whereby upon exceeding a shock threshold (in case of a shock sensor) or a pivot angle (in case of a tumbler) an electrical contact is made or broken to generate an observable signal.

From WO 83/02196 and WO 84/03585 (closest prior art) a shock sensor is known which comprises a housing and a metal ball provided in the housing which is held in a neutral position by a magnet. Upon impact, the sensor is subjected to a shock, and a force is exerted onto the metal ball, opposite to the attraction force of the magnet. If the impact exceeds a threshold value, and the acceleration of the ball resulting from the impact is sufficiently large to overcome the attraction force of the magnet, the shock threshold is overcome and the ball is loosened from the magnet. Thereby, an electrical contact is effectuated.

The known shock sensor however has the disadvantage that the acceleration of the ball depends on the shape of the shock pulse, and that the sensor shows an unstable behaviour when the force at impact approaches the shock threshold. The known sensor has the additional disadvantage that it is not only operational in one plane, for example in a horizontal plane, but also shows a too large sensitivity for shocks perpendicular to this plane, for example the vertical plane.

It is the aim of the invention to provide a switch system which mainly reacts to shocks in one direction, for example the horizontal direction, and which is substantially insensitive to shocks originating from other directions.

This is achieved according to the invention with the features of the first claim.

In the switch system of this invention, opposing sides of the sensor mass are clamped between an electrical contact mechanism and spring mechanism provided in the housing, whereby a first side of said sensor mass rests on a first tilting element, and the opposite side rests on at least three pivots, whereby each of the pivots has a longitudinal axis and a first convex surface, whereby the pivots are provided to execute a rolling motion over the first convex surface upon impact, and to induce a three dimensional movement of the sensor mass between the contact mechanism and the spring mechanism against a clamping force exerted on the sensor mass by the spring mechanism, whereby at least one of the pivots is tiltable between a position with electrical contact and a position without electrical contact. Because the pivot executes a rolling motion over its convex surface upon impact, it is possible to decrease the relative amount of the friction forces in the building up of the forces which must be overcome during the movement of the sensor mass.

In the switch system of this invention, the movement of the sensor mass in the interior space is mainly determined by the motion of the pivots. A free motion of the sensor mass, other than the motion imposed by the pivots, is substantially impossible. Since the pivots hardly react to a vertical action force, i.e. an action force parallel to the longitudinal axis of the pivot, and will hardly be tilted following a vertical action force, a switch system can be obtained that is substantially insensitive to impact forces originating from a direction perpendicular to the plane of action, in this case the horizontal plane.

The rolling motion of the pivots preferably induces a vertical movement of the sensor mass, which is opposite to the spring tension, as a result of which a force threshold must be overcome to induce a displacement of the sensor mass.

The pivot realises a motion threshold by moving the sensor mass during its rolling motion, both in horizontal and in vertical direction. The growth of the vertical movement of the sensor mass in the direction of the spring mechanism, together with the spring clamping force is a measure for the threshold force which must be overcome by the sensor mass to allow electrical contact to be made or interrupted. Thereby, the first tilting element adds to the horizontal motion of the sensor mass a sinusoidal component to the spring tension, and allows that an important part of the spring tension can be used as contact pressure.

Upon exceeding the threshold, a component of the spring force cooperates in defining the movement of the sensor mass, as a consequence of which the response speed of the switch system and the effectuation of the contact become less dependent on the energy transferred upon an impact.

The distance that should be overcome by the sensor mass to close an electrical contact can be selected to be very small, as a result of which a stable sensor can be obtained with a short response time.

The known switch system for shock detection or tilt angle detection has the disadvantage that it is not capable of detecting the direction of the shock or pivoting. This problem is solved by the present invention, in that in the sensor mass preferably substantially conical recesses are provided for receiving a second convex surface of the pivots, whereby the pivots are provided to be omnidirectionally tiltable over their convex surface and around their longitudinal axis, in the substantially conical recesses.

Thereby, the substantially conical recesses can be integrated in the contact mechanism, whereby the spring mechanism is mounted at the opposite side of the sensor mass, or the substantially conical recesses can be integrated in the spring mechanism, whereby the contact mechanism is mounted at the opposite side of the sensor mass.

An action force exerted onto the switch (gravity or shock) effectuates a contact by closing, through a contact disk, an annular make-contact. The make-contact is subdivided into mutually isolated sectors, whereby each sector represents a direction of detection. Thereby, a pivot may roll over the contact disk, in order to generate in this way sufficient contact pressure, and to allow the sensor mass after the disappearance of the action force, to regain its original central position without much counterforce.

In a sensor described in WO 84/03585, the system that must realise a contact for generating a signal upon exceeding a motion threshold, is separated from the system for detecting the motion threshold (ball-magnet system). Such a sensor however contains a large number of parts and requires a time-consuming and consequently expensive production process. With the switch system of this invention, the number of parts can be limited.

In the switch system of this invention, the substantially conical recesses, in which the pivots are movable, are integrated in the contact mechanism, and the spring construction is mounted at the opposite side of the sensor mass. The contacts are formed due to the fact that two of the three pivots close a normally closed contact through the sensor mass. The third pivot is positioned in a substantially conical recess, of which the surface is built up partially of an electrically conductive and partially of an isolating material. After activation of the sensor, thus after the onset of the motion of the sensor mass, the normally closed contact is opened, because the third similar conductive pivot moves relieflessly rolling, from a metal surface to an electrically non-conductive surface, whereby simultaneously a normally open contact is closed via the common pivot and the third pivot.

In many applications, it is necessary that the sensor after activation, remains in the switched position (bistable action), and must be reset manually. This may be achieved according to the invention in that the angle of the substantially conical recesses, the length of the single pivot and the spring force are selected in such a way that, upon removal of the action force, the return force caused by the substantially conical recesses is at any moment smaller than the opposing sinusoidal spring force component, as a result of which the sensor mass remains in the switched position (bistable positions). Moreover, the sensor mass may be returned to its original central position by a reset key.

In the embodiment described in WO 84/03585 the ball must short-circuit a few bars for effectuating a contact and for generating a signal. Because of a lack of contact pressure and an excess of contact bounce, these contacts are less reliable. According to this method, only a monostable make-contact may be obtained.

In the ball-magnet principle, it is mandatory to separate the contact system and the detection system from each other if a sound contact function is aimed at. As a result of this separation, it is almost impossible according to this principle, to obtain a monostable function. If it is desired to obtain a monostable function nevertheless, this gives rise to a low-quality contact function. With the present, a monostable function can be obtained, in that the angle of the substantially conical recesses, the length of the single pivot, and the spring force are selected such, that upon removal of the action force, the return force caused by the substantially conical recesses is at any moment larger than the opposing sinusoidal spring force component, as a result of which the sensor mass can return to its original central position (monostable position).

From a construction point of view, it is sometimes desirable not to realise the sensor threshold with the substantially conical recesses. In that case, the vertical movement of the sensor mass may be realised by excentric pivots, which during their rolling motion, move the sensor mass vertically, against the spring force, and whereby the excentricity may for example be obtained by providing levelled ends to the rolling pivots.

The invention is further elucidated by means of the attached figures and description of the figures.

Figure 1 shows a cross section of a switch system whereby the contacts are not integrated in the threshold mechanism. Both the neutral position (figure 1a) and the switched position (figure 1b) are shown here.

Figure 2 shows a cross section of the switch system acccording to the invention, whereby the contacts are integrated in the threshold mechanism. The building up of the contact is also shown.

Figure 3 shows a cross section of the switch system according to the invention, whereby the threshold principle and the spring mechanism differ from the other embodiments.

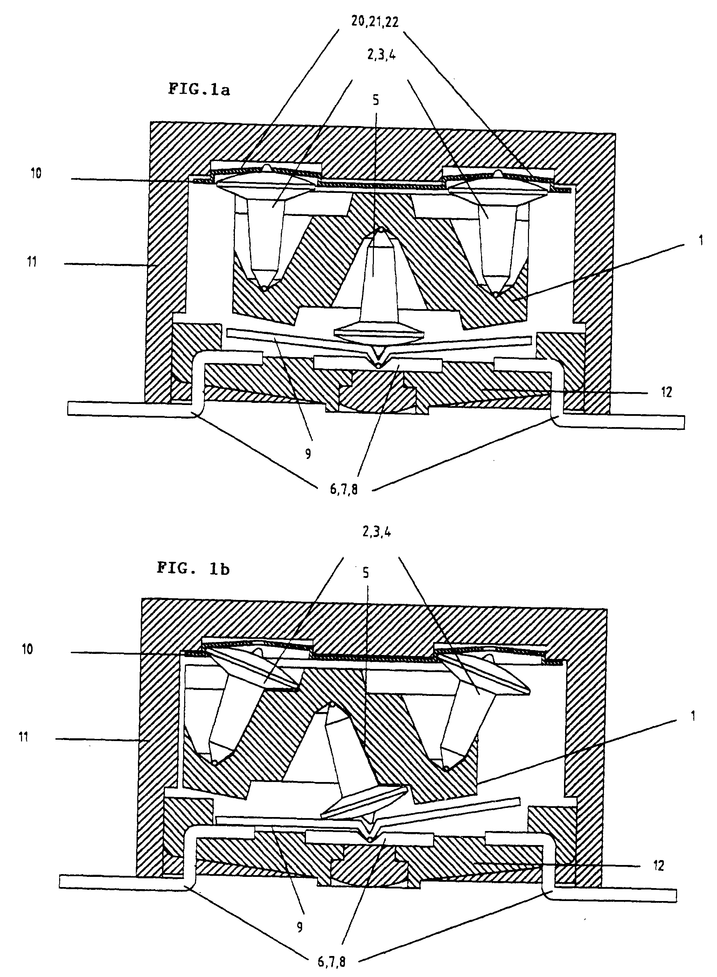

The active element of the construction shown in figure 1 is the sensor mass (1) which is activated by a shock or by its own gravity in shock sensors and tumblers respectively. The sensor mass is held resiliently between a spring construction (10) and a contact construction (12). An important part of the spring tension will be used as contact pressure, as a result of which the latter is many factors larger than the weight of the sensor mass. The sensor mass (1) which is made of metal can move substantionally without friction and omnidirectionally in a horizontal plane between at least three pivots (2, 3, 4) and pivot (5). The displacement of the sensor mass (1) starts when the action force exceeds a threshold. The force threshold is realised here by three conical recesses (20, 21, 22) which are integrated in the spring construction (10), and in which the pivots (2, 3, 4) can roll without friction. The cone angles together with the spring force cooperate in determining the force threshold. At the other side of the spring, a pivot (5) is received in a conical contact disk (9). In the first part of the motion of the sensor mass, the contact disk (9) will tilt together with the pivot (5), until the contact disk (9) touches contact (8) or (6). From that moment onwards, the pivot (5) will be forced to roll over the contact disk (9) until the displacement of the sensor mass stops. In this way, the spring force will exert a sufficiently strong pressure on both points of contact through the pivot (5) at the end of the displacement of the sensor mass,. At the onset of the motion of the sensor mass, the pivot (5) will impart a sinusoidal spring force component to the motion of the sensor mass (1). At the moment the contact disk (9) touches the contact (6), the sinusoidal spring force component disappears. Upon decrease of the action forces (shock or gravity), the threshold force, which is determined by the cone angles and the spring force, will reset the sensor mass (1) in its central position. Hereby, it is advantageous, that no opposing sinusoidal spring force component is present at that moment. The contacts (6, 7, 8) are embedded via a thermoplastic material into the contact construction (12), and are subdivided into sectors, whereby each sector represents a direction of detection. The whole is hermetically sealed with a thermoplastic housing (11).

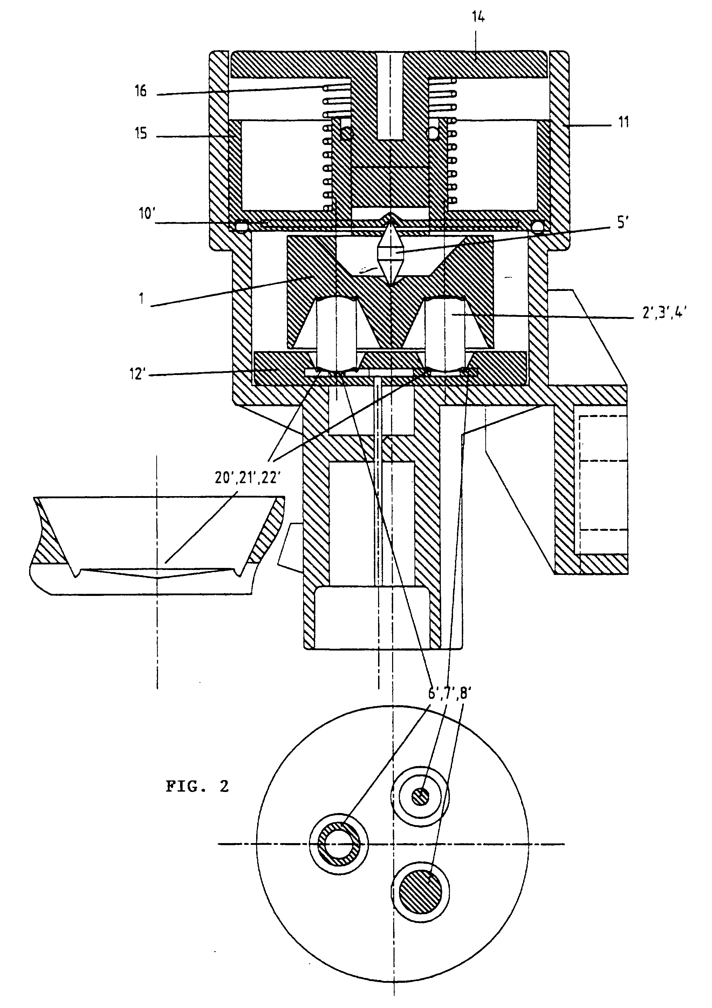

The active element of the construction shown in figure 2 comprises the sensor mass (1) which is activated by a shock or by its own gravity in respectively shock sensors or tumblers. The sensor mass is clamped between a spring construction (10') and a contact construction (12'). The full spring clamping force will be used as contact pressure, as a result of which the latter is many factors larger than the weight of the sensor mass. The sensor mass (1) of metal may move substantially without friction and omnidirectionally in a horizontal plane between at least three pivots (2', 3', 4') and pivot (5'). The motion of the sensor mass (1) starts after the action force has overcome a threshold. The threshold force is realised by three conical recesses (20', 21', 22') which are integrated in the contact construction (12'), and in which the pivots (2', 3', 4') may roll without friction. The cone angles together with the spring force are mainly determining for the force threshold. Once the threshold force is overcome, the sensor mass (1) can start its motion, whereby in addition to the action force, a sinusoidal spring force component is exerted. This sinusoidal spring force component is generated as a result of the action of the spring (10') on the tilting pivot (5'). The spring force, the length of the pivot (5') and the angle of the conical recesses are selected such, that at the end of motion of the sensor mass (1), the sinusoidal spring force component is larger than the reset forces of the conical recesses (20', 21', 22'). Because of this, the sensor mass (1) will not be capable of returning to the central position spontaneously when the action forces are removed.

The sensor mass (1) has two stable positions, and may only be resetted by pressing the reset key (14), along an inclination provided in the sensor mass (1).

The contact construction (12') comprises a reversing switch contact. The normally closed contact is formed between the contact (7'), the pivot (3') via the sensor mass (1), the pivot (4') and the contact (8'). The hatched parts represent metal contacts. Between the non-hatched parts (thermoplastic) and the metal parts, there are no rough transitions in the conical recesses (20', 21', 22'). During the motion of the sensor mass (1), the pivots (2', 3') roll freely from the metal to the non conducting thermoplastic area and inversely. In the switched position, the normally closed contact (7', 8') will be opened in this way, and the normally open contact (6', 8') will be closed.

The whole is preferably located in a closed housing (11) with a closing cover (15).

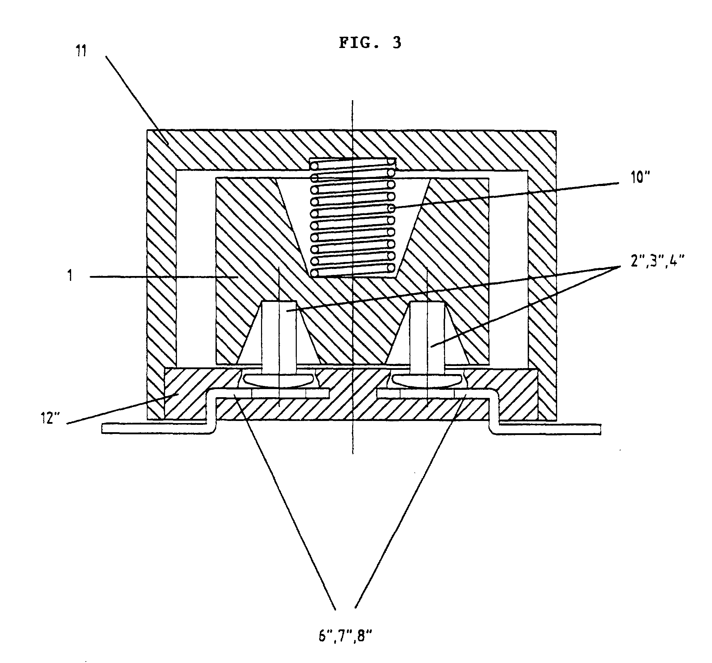

The active element of the construction shown in figure 3 comprises a sensor mass (1) which is activated by a shock or by its own gravity in shock sensors or tumblers respectively. The sensor mass is clamped between a spring construction (10") and a contact construction (12"). The full spring clamping force will be used as contact pressure, as a result of which the latter will be many factors larger than the weight of the sensor mass. The sensor mass (1) of metal may move substantially without friction and omnidirectionally in a horizontal plane between at least three pivots (2", 3", 4") and spring (10"). The motion of the sensor mass (1) starts after the action force has overcome a threshold. The threshold is realised here by pivots (2", 3", 4") which are levelled at one end. These pivots (2", 3", 4") roll on a surface in which the contacts (6", 7", 8") are integrated. The vertical lift of the sensor mass (1) against the spring force determines the threshold force. The sinusoidal component of the spring (10") is compensated by its cantilever rigidness. The whole is hermetically sealed by a housing (11).

## Claims

1. Switch system comprising a housing and a sensor mass mounted in the housing, **characterised in that** opposing sides of the sensor mass are clamped between an electrical contact mechanism and a spring mechanism provided in the housing, whereby a first side of said sensor mass rests on a first tilting element (5 or 5'), and the opposite side rests on at least three pivots (2, 3, 4 or 2', 3', 4'), whereby each of the pivots has a longitudinal axis and a first convex surface, whereby the pivots (2, 3, 4, 5; 2', 3', 4', 5') are provided to execute a rolling motion over the first convex surface upon impact, and to induce a three dimensional displacement of the sensor mass (1) between the contact mechanism and the spring mechanism against a clamping force exerted by the spring mechanism onto the sensor mass, whereby at least one of the pivots (2, 3, 4, 5; 2', 3', 4', 5') is tiltable between a position with electrical contact and a position without electrical contact.

2. Switch system according to claim 1, **characterised in that** the rolling motion of the pivots (2, 3, 4; 2', 3', 4') induces a substantially vertical movement of the sensor mass opposite to the spring tension, as a result of which a threshold force must be overcome to set the sensor mass (1) in motion.

3. Switch system according to claim 1 or 2, **characterised in that** the sensor mass is provided with substantially conical recesses (20, 21, 22 or 20', 21', 22') for receiving a second convex surface of the pivots (2, 3, 4; 2', 3', 4'), whereby the pivots are provided to be omnidirectionally tiltable over their convex surface in the substantially conical recess to induce a three dimensional motion of the sensor mass (1).

4. Switch system according to any one of claims 1 to 3, **characterised in that** the movability of the sensor mass in the direction of the contact mechanism or the spring mechanism, together with the spring clamping is a measure for the threshold force which must be overcome by the sensor mass (1) en whereby the first tilting element (5, 5') adds a sinusoidal component of the spring clamping to the horizontal motion of the sensor mass (1), and moreover allows that part of the spring tension be used as contact pressure.

5. Switch system according to claim 4, **characterised in that** the substantially conical recesses (20', 21', 22') are integrated into the contact mechanism and the spring mechanism (10') is mounted at the opposite side of the sensor mass (1).

6. Switch system according to claim 4, **characterised in that** the substantially conical recesses (20, 21, 22) are integrated into the spring mechanism and the contacts (6, 7, 8, 9) are mounted at the other side of the sensor mass (1).

7. Switch system according to any one of claims 2 to 6, **characterised in that** two of the three pivots (2', 3') via the sensor mass (1) close a normally closed contact (7', 8'), which is provided to be opened upon exceeding the motion threshold, whereby the corresponding conductive pivot (2') passes relieflessly rolling, from a metal surface onto an electrically non conductive surface, whereby simultaneously in an inverse way, via the common pivot (3') and the third pivot (4'), a normally open contact (6') is closed.

8. Switch system according to any one of claims 3 to 7, **characterised in that** the angle of the substantially conical recesses (20', 21', 22'), the length of the single pivot (5') and the spring force are selected such, that upon removal of the action force, the return force caused by the conical recesses (20', 21', 22') is at any moment smaller than the opposing sinusoidal spring force component, as a result of which the sensor mass (1) remains in the switched position.

9. Switch system according to any one of claims 1 to 8, **characterised in that** the sensor mass (1) comprises a reset key (14) for resetting the sensor mass to its original position.

10. Switch system according to any one of claims 1 to 6, 8, 9, **characterised in that** the electrical contact mechanism comprises a disk (9) and contacts (6, 7, 8) which are subdivided into electrically conductive sectors, whereby subsequent sectors are separated from each other by an isolator, and the surface of the pivot (2', 3', 4', 5) is provided to be rollable over the contact disk for effectuating an annular make-contact (6, 8), whereby each sector represents a direction of detection.

11. Switch system according to any one of claims 1 to 10, **characterised in that** at least one excentrically mounted pivot (2", 3", 4") is provided, which excentric pivot is provided to move, during its rolling motion, the sensor mass (1) against the spring force, in the direction of the spring mechanism.

12. Switch system according to claim 11, **characterised in that** at least one excentric pivot (2", 3", 4") is provided with levelled ends.

## Patentansprüche

1. Schaltersystem, umfassend ein Gehäuse und eine in dem Gehäuse angebrachte Sensormasse, **dadurch gekennzeichnet, dass** entgegengesetzte Seiten der Sensormasse zwischen einem elektrischen Kontaktmechanismus und einem Federmechanismus, der in dem Gehäuse vorgesehen ist, eingeklemmt sind, wobei eine erste Seite der Sensormasse auf einem ersten Kippelement (5 oder 5') aufliegt und die entgegengesetzte Seite auf mindestens drei Drehzapfen (2, 3, 4 oder 2', 3', 4') aufliegt, wobei jeder der Drehzapfen eine Längsachse und eine erste konvexe Oberfläche aufweist, wobei die Drehzapfen (2, 3, 4, 5; 2', 3', 4', 5') vorgesehen sind, um nach dem Auftreffen eine Rollbewegung über die erste konvexe Oberfläche auszuführen und eine dreidimensionale Verlagerung der Sensormasse (1) zwischen dem Kontaktmechanismus und dem Federmechanismus gegen eine Klemmkraft herbeizuführen, welche vom Federmechanismus auf die Sensormasse ausgeübt wird, wobei mindestens einer der Drehzapfen (2, 3, 4, 5; 2', 3', 4', 5') zwischen einer Position mit elektrischem Kontakt und einer Position ohne elektrischen Kontakt gekippt werden kann.

2. Schaltersystem nach Anspruch 1, **dadurch gekennzeichnet, dass** die Rollbewegung der Drehzapfen (2, 3, 4; 2', 3', 4') eine im Wesentlichen vertikale Bewegung der Sensormasse gegen die Federspannung herbeiführt, wobei infolgedessen eine Schwellenkraft überwunden werden muss, um die Sensormasse (1) in Bewegung zu setzen.

3. Schaltersystem nach Anspruch 1 oder 2, **dadurch gekennzeichnet, dass** die Sensormasse mit im Wesentlichen konischen Ausnehmungen (20, 21, 22 oder 20', 21', 22') zum Aufnehmen einer zweiten konvexen Oberfläche der Drehzapfen (2, 3, 4; 2', 3', 4'), wodurch die Drehzapfen ausgebildet sind, um in alle Richtungen über ihre konvexe Oberfläche in der im Wesentlichen konischen Ausnehmung kippbar zu sein, um eine dreidimensionale Bewegung der Sensormasse (1) herbeizuführen.

4. Schaltersystem nach einem beliebigen der Ansprüche 1 bis 3, **dadurch gekennzeichnet, dass** die Beweglichkeit der Sensormasse in Richtung des Kontaktmechanismus oder des Federmechanismus gemeinsam mit der Federklemmung ein Maß für die Schwellenkraft ist, welche von der Sensormasse (1) überwunden werden muss, wobei das erste Kippelement (5, 5') der horizontalen Bewegung der Sensormasse (1) eine Sinuskomponente der Federklemmung hinzufügt und überdies ermöglicht, dass ein Teil der Federspannung als Kontaktdruck verwendet wird.

5. Schaltersystem nach Anspruch 4, **dadurch gekennzeichnet, dass** die im Wesentlichen konischen Ausnehmungen (20', 21', 22') in den Kontaktmechanismus integriert sind und der Federmechanismus (10') an der entgegengesetzten Seite der Sensormasse (1) angebracht ist.

6. Schaltersystem nach Anspruch 4, **dadurch gekennzeichnet, dass** die im Wesentlichen konischen Ausnehmungen (20, 21, 22) in den Federmechanismus integriert sind und die Kontakte (6, 7, 8, 9) auf der anderen Seite der Sensormasse (1) angebracht sind.

7. Schaltersystem nach einem beliebigen der Ansprüche 2 bis 6, **dadurch gekennzeichnet, dass** zwei der drei Drehzapfen (2', 3') über die Sensormasse (1) einen normal geschlossenen Kontakt (7', 8') schließen, welcher ausgebildet ist, um nach Überschreiten der Bewegungsschwelle geöffnet zu werden, wobei sich der entsprechende leitende Drehzapfen (2') nichtentspannt rollend von einer Metalloberfläche zu einer elektrisch nichtleitenden Oberfläche bewegt, wobei gleichzeitig auf umgekehrte Weise über den gemeinsamen Drehzapfen (3') und den dritten Drehzapfen (4') ein normal offener Kontakt (6') geschlossen wird.

8. Schaltersystem nach einem beliebigen der Ansprüche 3 bis 7, **dadurch gekennzeichnet, dass** der Winkel der im Wesentlichen konischen Ausnehmungen (20', 21', 22'), die Länge des einzelnen Drehzapfens (5') und die Federkraft derart gewählt werden, dass beim Wegnehmen der Wirkkraft die Rückführkraft, welche durch die konischen Ausnehmungen (20', 21', 22') verursacht wird, zu einem beliebigen Zeitpunkt kleiner als die entgegengesetzte sinusförmige Federkraftkomponente ist, wobei infolgedessen die Sensormasse (1) in der geschalteten Position verharrt.

9. Schaltersystem nach einem beliebigen der Ansprüche 1 bis 8, **dadurch gekennzeichnet, dass** die Sensormasse (1) eine Rückstelltaste (14) zum Rückstellen der Sensormasse in ihre ursprüngliche Position umfasst.

10. Schaltersystem nach einem beliebigen der Ansprüche 1 bis 6, 8, 9, **dadurch gekennzeichnet, dass** der elektrische Kontaktmechanismus eine Scheibe (9) und Kontakte (6, 7, 8) umfasst, welche in elektrisch leitende Sektoren unterteilt sind, wobei aufeinanderfolgende Sektoren durch einen Isolator voneinander getrennt sind, und die Oberfläche des Drehzapfens (2', 3', 4', 5) ausgebildet ist, um über die Kontaktscheibe rollbar zu sein, zum Realisieren eines ringförmigen Schließers (6, 8), wobei jeder Sektor eine Erfassungsrichtung darstellt.

11. Schaltersystem nach einem beliebigen der Ansprüche 1 bis 10, **dadurch gekennzeichnet, dass** mindestens ein exzentrisch angebrachter Drehzapfen (2", 3", 4") vorgesehen ist, wobei der exzentrische Drehzapfen ausgebildet ist, während seiner rollenden Bewegung die Sensormasse (1) gegen die Federkraft in Richtung des Federmechanismus zu bewegen.

12. Schaltersystem nach Anspruch 11, **dadurch gekennzeichnet, dass** mindestens ein exzentrischer Drehzapfen (2", 3", 4") mit flachen Enden vorgesehen ist.

## Revendications

1. Système de commutation comprenant un logement et une masse de détecteur montée dans le logement, **caractérisé en ce que** des côtés opposés de la masse de détecteur sont pincés entre un mécanisme de contact électrique et un mécanisme de ressort prévus dans le logement, un premier côté de la masse de détecteur reposant sur un premier élément de basculement (5 ou 5') et le côté opposé reposant sur au moins trois pivots (2, 3, 4 ou 2', 3', 4'), chacun des pivots ayant un axe longitudinal et une première surface convexe, les pivots (2, 3, 4, 5; 2', 3', 4', 5') étant prévus pour exécuter un mouvement de roulement sur la première surface convexe lors d'un impact, et pour induire un déplacement tridimensionnel de la masse de détecteur (1) entre le mécanisme de contact et le mécanisme de ressort à l'encontre d'une force de pinçage exercée par le mécanisme de ressort sur la masse de détecteur, au moins un des pivots (2, 3, 4, 5; 2', 3', 4', 5') étant basculable entre une position avec contact électrique et une position sans contact électrique.

2. Système de commutation suivant la revendication 1, **caractérisé en ce que** le mouvement de roulement des pivots (2, 3, 4; 2', 3', 4') induit un mouvement sensiblement vertical de la masse de détecteur à l'opposé de la tension du ressort, avec pour résultat qu'une force seuil doit être surmontée pour mettre la masse de détecteur (1) en mouvement.

3. Système de commutation suivant l'une des revendications 1 et 2, **caractérisé en ce que** la masse de détecteur est pourvue d'évidements sensiblement coniques (20, 21, 22 ou 20', 21', 22') pour recevoir une seconde surface convexe des pivots (2, 3, 4; 2', 3', 4'), les pivots étant prévus pour être basculables d'une manière omnidirectionnelle sur leur surface convexe dans l'évidement sensiblement conique pour induire un mouvement tridimensionnel de la masse de détecteur (1).

4. Système de commutation suivant l'une quelconque des revendications 1 à 3, **caractérisé en ce que** la capacité de déplacement de la masse de détecteur dans la direction du mécanisme de contact ou du mécanisme de ressort conjointement au serrage de ressort est une mesure pour la force seuil qui doit être surmontée par la masse de détecteur (1), le premier élément de basculement (5, 5') ajoutant une composante sinusoïdale du pinçage de ressort au mouvement horizontal de la masse de détecteur (1) et permettant, en outre, qu'une partie de la tension de ressort soit utilisée comme pression de contact.

5. Système de commutation suivant la revendication 4, **caractérisé en ce que** les évidements sensiblement coniques (20', 21', 22') sont intégrés dans le mécanisme de contact et **en ce que** le mécanisme de ressort (10') est monté au côté opposé de la masse de détecteur (1).

6. Système de commutation suivant la revendication 4, **caractérisé en ce que** les évidements sensiblement coniques (20, 21, 22) sont intégrés dans le mécanisme de ressort et **en ce que** les contacts (6, 7, 8, 9) sont montés à l'autre côté de la masse de détecteur (1).

7. Système de commutation suivant l'une quelconque des revendications 2 à 6, **caractérisé en ce que** deux des trois pivots (2', 3') ferment, par l'intermédiaire de la masse de détecteur (1), un contact normalement fermé (7', 8') qui est prévu pour être ouvert lorsque le seuil de mouvement est dépassé, le pivot conducteur correspondant (2') passant par un roulement sans relief d'une surface métallique à une surface électriquement non conductrice, un contact normalement ouvert (6') étant, simultanément d'une manière inverse, fermé par l'intermédiaire du pivot commun (3') et du troisième pivot (4').

8. Système de commutation suivant l'une quelconque des revendications 3 à 7, **caractérisé en ce que** l'angle des évidements sensiblement coniques (20', 21', 22'), la longueur du pivot unique (5') et la force de ressort sont choisis de façon que, après suppression de la force d'action, la force de rappel provoquée par les évidements coniques (20', 21', 22') est à tout moment plus petite que la composante de force de ressort sinusoïdale opposée, ce qui a pour effet que la masse de détecteur (1) reste dans la position commutée.

9. Système de commutation suivant l'une quelconque des revendications 1 à 8, **caractérisé en ce que** la masse de détecteur (1) comprend une clé de remise (14) pour remettre la masse de détecteur dans sa position initiale.

10. Système de commutation suivant l'une quelconque des revendications 1 à 6, 8, 9, **caractérisé en ce que** le mécanisme de contact électrique comprend un disque (9) et des contacts (6, 7, 8) qui sont subdivisés en secteurs électriquement conducteurs, des secteurs subséquents étant séparés l'un de l'autre par un isolant, et **en ce que** la surface du pivot (2', 3', 4', 5) est prévue pour pouvoir être roulée sur le disque de contact afin d'effectuer un contact travail annulaire (6, 8), chaque secteur représentant une direction de détection.

11. Système de commutation suivant l'une quelconque des revendications 1 à 10, **caractérisé en ce qu'**au moins un pivot monté excentriquement (2", 3", 4") est prévu, ce pivot excentrique étant prévu pour déplacer, pendant son mouvement de roulement, la masse de détecteur (1) à l'encontre de la force du ressort, dans la direction du mécanisme de ressort.

12. Système de commutation suivant la revendication 11, **caractérisé en ce qu'**au moins un pivot excentrique (2", 3", 4") est pourvu d'extrémités biseautées.
